# EUROPEAN PATENT SPECIFICATION

(11) **EP 1 506 708 B1**
(45) Date of publication and mention of the grant of the patent: **24.04.2013**
(21) Application number: 04254488.2
(22) Date of filing: 27.07.2004
(51) Int. Cl.: A01K 93/00

(54) **A float stop**
Schwimmkörper zum Fischen
Ensemble flotteur pour la pêche

(30) Priority: 28.07.2003 GB 0317623
(43) Date of publication of application: 16.02.2005
(73) Proprietor: Fox Design International Limited, Hainault, Essex 1G6 3UT (GB)
(72) Inventor: Cottis, Maxwell Stewart, Braintree, Essex CM7 9FD (GB)
(74) Representative: Crouch, David John

(56) References cited:
- FR-A- 961 866
- US-A- 5 203 107
- US-B1- 6 389 732

## Description

The present invention relates to a float stop for a fishing hook which comprises an abutment through which extends a through-hole to define an axis of the stop, and through which such a hook is threaded when the float stop is in use.

US-A-5,203,107 shows a fishing line limit with hemispherical ends.

US-A-6,389,732 shows a conical line limit having an eyelet at both ends to connect to its respective lengths of fishing lines.

FR-A-961,866 shows a conical helical fishing line guide and abutment.

Float stops are used on fishing hooks to maintain the position of sliding rings. These sliding rings are used as attachment for floats. Previously proposed float stops are made of a suitable lightweight material and are usually spherical in shape, with an internal bore running through their centre, through which a hook is threaded. A disadvantage of such a construction of a float stop is that its spherical shape does not readily allow it to be gripped when its position on a hook is being adjusted. Another disadvantage of this construction of a float stop is that it does not maintain its position on the hook very well, thereby not providing a secure abutment for the sliding ring also threaded onto the hook, which has a float attached to it. It is usually necessary to fix the position of the float stop on the hook with adhesive to avoid it moving. Once this has been done, any adjustment to the positioning of the float stop is not easily achieveable. Additionally, previously proposed float stops perish easily. Furthermore, such float stops easily split and break into two when placed on the hook, thereby rendering the float stops useless.

The present invention aims to provide a remedy for one or more of these disadvantages.

Accordingly, the present invention is directed to a float stop having the construction as set out in the opening paragraph of the present specification, in which the stop comprises a rubber-like plastics material, in which the float stop comprises a non-slip material, whilst nonetheless being manually slidable along such a hook by the user, and in which the float stop tapers in a given direction along its axis from one end thereof to its opposite end, the said one end being of greater cross-section than the said opposite end.

Preferably the abutment is generally conical in shape. The float stop is positioned such that it tapers in a direction away from a sliding ring positioned next to it on the hook. The tapering enables the float stop to be more easily gripped when the float stop is having its position on the hook adjusted. As this construction of a float stop is easier to grip, it is less likely to split when being handled, and is therefore stronger and less perishable. Also, the sliding ring abuts the larger end of the float stop, holding it in position more securely. This provides a more secure positioning for the sliding ring which is positioned next to the float stop to which a float is attached. Also, no adhesive is required to fix the float stop into its position. Therefore, the position of the float stop can be easily adjusted as required.

Advantageously, a pair of such float stops for a fishing hook are used in combination with each other, in which one float stop has positioned from it a further float stop such that their tapering is in opposite directions, the tapering in both cases being away from the region between them. A sliding ring is positioned in between them. In this configuration, the movement of the sliding ring (and the float which is attached to the sliding ring) along the hook can be limited by reducing the distance between the float stops. By increasing the distance between the float stops, the movement of the sliding ring (and float) along the hook can be increased.

Examples of float stops made in accordance with the present invention will now be described with reference to the accompanying drawings, in which:
- Figure 1: shows a side view of a float stop embodying the present invention;
- Figure 2: shows a perspective view of two float stops used in combination, in accordance with the present invention; and
- Figure 3: shows a perspective view of a hook rig incorporating the combination shown in Figure 2.

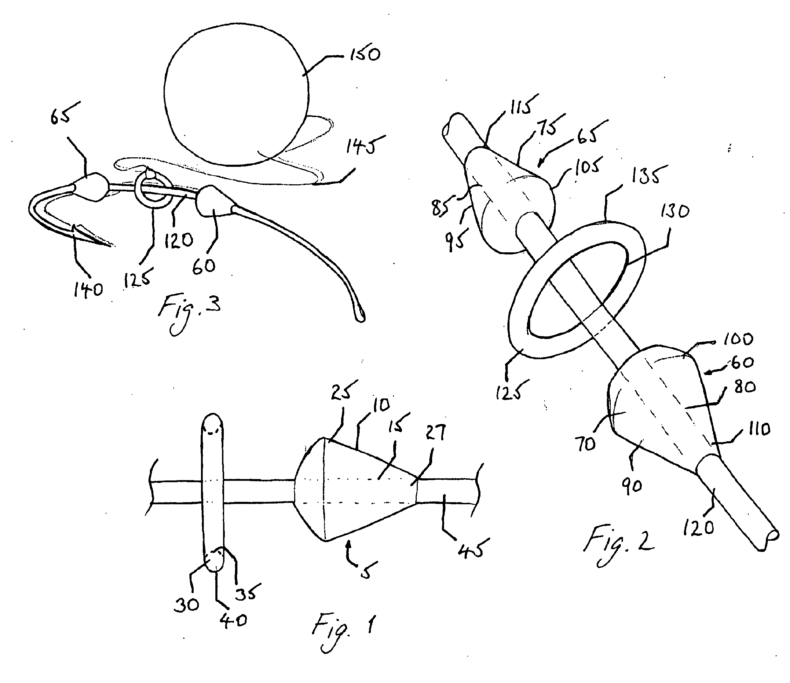

Figure 1 shows a float stop 5, comprising a generally conical abutment 10 made of a suitable lightweight rubber-like plastics material, through which extends a through-hole 15 to define an axis of the stop 5. The stop 5 tapers in a given direction along its axis from one end 25 thereof to its opposite end 27. The end 25 has a greater cross-section that the end 27. Its side edges 20 extend from its larger end 25, to its smaller end 27. Both the ends 25 and 27 are generally rounded. A straight portion 45 of a hook is threaded through the internal bore 15 of the float stop 5. A sliding ring 30, having an inner radius 35 and an outer radius 40, also has straight portion 45 of the hook threaded through it. The abutment 10 tapers in a direction away from the sliding ring 30.

Figure 2 shows two float stops, 60 and 65, both comprising generally conical abutments 70 and 75 made of suitable lightweight rubber-like plastics material, through which extend through-holes 80 and 85 which define axes of the stops 60 and 65. The stops 60 and 65 taper in a given direction along their axes, from ends 100 and 105 thereof to their opposite ends 110 and 115. The ends 100 and 105 have a greater cross-section than the ends 110 and 115. Their side edges 90 and 95 extend from their larger ends 100 and 105, to their smaller ends 110 and 115. All these ends 100, 105, 110, and 115 are generally rounded. A straight portion 120 of a hook is threaded through the internal bores 80 and 85. A sliding ring 125, having an inner radius 130 and an outer radius 135, also has the straight portion 120 of the hook threaded through it. The abutments 70 and 75 taper in a direction away from the sliding ring 125.

When the float stop 5 is in use, a float (not shown) is attached to the sliding ring 30. The float stop 5 can be grasped along its tapering sides 20 and moved into position on the straight portion 45 of the hook. Being made of non-slip material, the float stop 5 retains its position on the straight portion 45 of the hook. A sliding ring 30 is also threaded onto the straight portion 45 of the hook, such that it is positioned facing the larger end 25 of the float stop 5. This larger end 25, abuts the sliding ring, preventing its movement further along the hook 45.

When two float stops are used in combination, the sliding ring 125 is positioned in between the two float stops 60 and 65, such that the sliding ring is positioned in between the larger ends 100 and 105. By gripping the tapering sides 90 and 95, the float stops 60 and 65 can be positioned closer to or further from the sliding ring 125, restricting or increasing the movement of the sliding ring 125 along the straight portion 120 of the hook.

The float stops 60 and 65 are positioned on the straight portion 120 of the hook rig 140. The sliding ring 125 is positioned between the float stops 60 and 65, also on the straight portion 120 of the hook rig 140. A float 150 is attached, for example by a string 150, to the sliding ring 125.The float stop may be be further coated along its internal bore with a non-slip coating to facilitate its positioning on the hook.

## Claims

1. A float stop (5) for a fishing hook, through which extends a through-hole (15) to define an axis of the float stop (5) and through which such a hook is threaded when the float stop (5) is in use, **characterised in that** the float stop (5) comprises a rubber-like plastics material, **in that** the float stop (5) comprises a non-slip material, whilst nonetheless being manually slidable along such a hook by the user, and **in that** the float stop (5) tapers in a given direction along its axis from one end (25) thereof to its opposite end (27), the said one end (25) being of greater cross-section than the said opposite end (27).

2. A float stop (5) according to claim 1, **characterised in that** the float stop (5) is generally conical in shape.

3. A fishing hook assembly comprising a fishing hook onto which is threaded at least one float stop (60) as claimed in claim 1 or claim 2, and a float ring (125) also threaded onto the fishing hook, **characterised in that** the float ring (125) and the float stop (60) are so positioned that the float stop (60) acts as an abutment to limit movement of the float ring (125), and the float stop (60) tapers in a direction away from the float ring (125).

4. A fishing hook assembly according to claim 3, **characterised in that** a further float stop (65) as claimed in claim 1 or claim 2 is also threaded onto the hook, with the float ring (125) located between the float stops (60 and 65) and the further float stop (65) also acting as an abutment to limit movement of the float ring (125) and tapering in a direction away from the float ring (125), the float stops (60 and 65) being spaced apart from one another by an amount which determines the available travel for the float ring (125) along the fishing hook.

## Patentansprüche

1. Posenstopper (5) für einen Angelhaken, durch den sich eine Durchgangsbohrung (15) erstreckt, um eine Achse des Posenstoppers (5) zu definieren, und durch den solch ein Haken bei Benutzung des Posenstoppers (5) gefädelt ist, **dadurch gekennzeichnet, dass** der Posenstopper (5) aus einem gummiartigen Kunststoffmaterial besteht, dadurch, dass der Posenstopper (5) aus einem rutschfesten Material besteht, aber dennoch entlang des Hakens durch den Benutzer von Hand verschoben werden kann, und dadurch, dass der Posenstopper (5) sich in einer vorgegebenen Richtung entlang seiner Achse von seinem einen Ende (25) zu seinem entgegengesetzten Ende (27) verjüngt, wobei das eine Ende (25) einen größeren Querschnitt aufweist als das entgegengesetzte Ende (27).

2. Posenstopper (5) nach Anspruch 1, **dadurch gekennzeichnet, dass** der Posenstopper (5) im Allgemeinen konisch geformt ist.

3. Angelhakenanordnung die einen Angelhaken umfasst, auf den mindestens ein Posenstopper (60) nach Anspruch 1 oder Anspruch 2 gefädelt ist, sowie einen Posenring (125), der ebenfalls auf den Angelhaken gefädelt ist, **dadurch gekennzeichnet, dass** der Posenring (125) und der Posenstopper (60) so angeordnet sind, dass der Posenstopper (60) als Widerlager zur Bewegungsbegrenzung des Posenrings (125) dient, und der Posenstopper (60) sich in einer vom Posenring (125) wegführenden Richtung verjüngt.

4. Angelhakenanordnung nach Anspruch 3, **dadurch gekennzeichnet, dass** ein weiterer Posenstopper (65) nach Anspruch 1 oder Anspruch 2 ebenfalls auf den Haken gefädelt ist, wobei der Posenring (125) zwischen den Posenstoppern (60 und 65) angeordnet ist und der weitere Posenstopper (65) ebenfalls als Widerlager zur Bewegungsbegrenzung des Posenrings (125) dient und sich in einer vom Posenring (125) wegführenden Richtung verjüngt, wobei die Posenstopper (60 und 65) um ein Maß voneinander beabstandet sind, das den dem Posenring (125) zur Verfügung stehenden Weg entlang des Angelhakens bestimmt.

## Revendications

1. Stop float (5), ou flotteur d'arrêt, pour hameçon, à travers lequel s'étend un trou traversant (15) pour définir l'axe du stop float (5) et à travers lequel est enfilé cet hameçon lorsque le stop float (5) est en service, **caractérisé en ce que** le stop float (5) comprend une matière plastique caoutchouteuse, **en ce que** le stop float (5) comprend une matière antidérapante permettant néanmoins à l'utilisateur de le faire coulisser manuellement le long de cet hameçon, et **en ce que** le stop float (5) s'amincit dans une direction donnée le long de son axe d'une première extrémité (25) vers son extrémité opposée (27), ladite première extrémité (25) ayant une coupe transversale plus grande que celle de ladite extrémité opposée (27).

2. Stop float (5) selon la revendication 1, **caractérisé en ce que** le stop float (5) est généralement de forme conique.

3. Ensemble d'hameçon comprenant un hameçon sur lequel est enfilé au moins un stop float (60) selon la revendication 1 ou la revendication 2, et un anneau (125) également enfilé sur l'hameçon, **caractérisé en ce que** l'anneau (125) et le stop float (60) sont positionnés de manière que le stop float (60) agisse comme un butoir afin de limiter les mouvements de l'anneau (125), et le stop float (60) s'amincit dans la direction s'éloignant de l'anneau (125).

4. Ensemble d'hameçon selon la revendication 3, **caractérisé en ce qu'**un autre stop float (65) selon la revendication 1 ou la revendication 2 est également enfilé sur l'hameçon, l'anneau (125) étant situé entre les stop floats (60 et 65) et l'autre stop float (65) agissant également comme un butoir afin de limiter les mouvements de l'anneau (125), et s'amincit dans la direction s'éloignant de l'anneau (125), les stop floats (60 et 65) étant écartés l'un de l'autre selon un intervalle qui détermine le jeu disponible pour l'anneau (125) le long de l'hameçon.
